# DEMANDE DE BREVET EUROPEEN

(11) **EP 4 534 806 A1**
(43) Date de publication de la demande: **09.04.2025**
(21) Numéro de dépôt: 23306671.1
(22) Date de dépôt: 02.10.2023
(51) Int. Cl.: F01D 17/16, F02C 9/22, F04D 29/56

(54) **DISPOSITIF DE COMMANDE DE CALAGE D'AUBES D'UNE GRILLE D'AUBES À CALAGE VARIABLE DE TURBOMACHINE D'AÉRONEF**

(71) Demandeur: Safran Aero Boosters, 4041 Herstal (BE); Safran Aircraft Engines, 75015 Paris (FR)
(72) Inventeur: GUEGAN, Damien Bernard Emeric, 77550 MOISSY-CRAMAYEL (FR); RAULIN, Dominique, 77550 MOISSY-CRAMAYEL (FR); DESOMBRE, Didier Gabriel Bertrand, 77550 MOISSY-CRAMAYEL (FR); JABLONSKI, Laurent, 77550 MOISSY-CRAMAYEL (FR); GEORGES, Yannick, 4041 HERSTAL (BE)
(74) Mandataire: Germain Maureau

(57) **Abrégé**

Dispositif de commande de calage d'aubes (20) d'une grille d'aubes à calage variable (S1, S2) de turbomachine aéronautique, le dispositif de commande comprenant un corps annulaire (22) d'axe de révolution (X) présentant une face radialement interne (22A) et une face radialement externe (22B), le dispositif de commande (20) comprenant une pluralité de patins internes (24) configurée pour coopérer avec la face radialement interne (22A) du corps annulaire (22) et une pluralité de patins externes (26) configurée pour coopérer avec la face radialement externe (22B) du corps annulaire (22), grâce à quoi les mouvements du corps annulaire (22) sont limités radialement vers l'intérieur et vers l'extérieur, et guidés en rotation autour de l'axe de révolution (X).

## Description

### Domaine Technique

Le présent exposé concerne un dispositif de commande de calage d'aubes d'une grille d'aubes à calage variable de turbomachine aéronautique, et une turbomachine aéronautique équipée d'un tel dispositif.

Le terme « turbomachine aéronautique » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz, et les turbomoteurs dans lesquels l'énergie motrice est fournie par la rotation d'un arbre moteur. Par exemple, des turbomoteurs sont utilisés comme moteur pour des hélicoptères. Selon un autre exemple, les turbopropulseurs (turbomoteur entrainant une hélice) sont des turbomoteurs utilisés comme moteur d'avion.

Le terme « grille d'aubes » désigne un unique rotor (ou roue mobile à aubes) ou un unique stator (ou roue fixe à aubes) comprenant plusieurs aubes.

### Technique antérieure

On connait différents systèmes de calage pour une grille d'aubes à calage variable de turbomachine aéronautique, par exemple par EP 1 696 134, FR 3 119 859, ou WO 2019/243484. Toutefois, selon les configurations rencontrées et les conditions d'utilisations, le calage des aubes peut varier légèrement d'une aube à l'autre au sein de la grille d'aubes, par exemple lorsque le système ne comprend qu'un seul vérin de commande. Il existe donc un besoin pour améliorer l'homogénéité du calage entre les différentes aubes au sein d'une même grille d'aubes.

### Exposé de l'invention

Un mode de réalisation concerne un dispositif de commande de calage d'aubes d'une grille d'aubes à calage variable de turbomachine aéronautique, le dispositif de commande comprenant un corps annulaire d'axe de révolution, le corps annulaire étant configuré pour être relié mécaniquement aux aubes et pour ajuster le calage des aubes en fonction de la position angulaire du corps annulaire autour de l'axe de révolution, le corps annulaire présentant une face radialement interne et une face radialement externe, le dispositif de commande comprenant une pluralité de patins internes configurée pour coopérer avec la face radialement interne du corps annulaire et une pluralité de patins externes configurée pour coopérer avec la face radialement externe du corps annulaire, grâce à quoi les mouvements du corps annulaire sont limités radialement vers l'intérieur et vers l'extérieur, et guidés en rotation autour de l'axe de révolution

De manière générale, la direction axiale correspond à la direction de l'axe de révolution du corps annulaire, qui correspond, lorsque le dispositif de commande de calage d'aubes est monté sur une turbomachine aéronautique, à l'axe de rotation du générateur de gaz. Une direction radiale est une direction perpendiculaire à la direction axiale. La direction azimutale ou circonférentielle correspond à la direction décrivant un anneau autour de la direction axiale. Les trois directions axiale, radiale et azimutale (ou circonférentielle) correspondent respectivement aux directions définies par la côte, le rayon et l'angle dans un système de coordonnées cylindrique. En outre, l'amont et l'aval sont définis par rapport au sens d'écoulement normal du fluide (de l'amont vers l'aval) à travers la turbomachine aéronautique. Enfin, sauf précision contraire, les adjectifs intérieur/interne et extérieur/externe sont utilisés en référence à la direction radiale de sorte que la partie interne (i.e. radialement interne) d'un élément est plus proche de l'axe définissant la direction axiale que la partie externe (i.e. radialement externe) du même élément.

Dans la suite, et sauf indication contraire, par « dispositif de commande » on entend « dispositif de commande de calage d'aubes ». Dans la suite et sauf indication contraire, par « turbomachine » on entend « turbomachine aéronautique ».

Le corps annulaire est parfois appelé par l'homme du métier « anneau de synchronisation » ou « anneau de calage ». Le corps annulaire est mobile en rotation autour de l'axe de révolution et permet, en général par le biais d'un système de tringlerie connu par ailleurs par l'homme du métier, d'ajuster le calage des aubes en fonction de la position angulaire du corps annulaire autour de l'axe de révolution. Pour rappel, le calage ou angle de calage d'une aube correspond à l'angle que fait une corde de l'aube, la corde étant un segment géométrique abstrait s'étendant, à une hauteur donnée du profil aérodynamique de l'aube, entre le bord d'attaque et le bord de fuite de l'aube, avec l'axe de révolution. Par exemple, le corps annulaire peut être déplacé en rotation autour de l'axe de révolution par le biais d'un ou plusieurs organes de commande.

Les patins, internes ou externes, peuvent former des butées ou des glissières, et sont configurés pour limiter radialement et guider circonférentiellement les déplacements du corps annulaire autour de l'axe de révolution. Les patins internes sont tous disposés du côté interne par rapport au corps annulaire. Les patins externes sont tous disposés du côté externe par rapport au corps annulaire. Les patins, internes et externes, sont fixes, ou immobiles, par rapport au corps annulaire. Les patins internes peuvent notamment limiter d'éventuelles déformations du corps annulaire radialement vers l'intérieur. Les patins externes peuvent notamment limiter d'éventuelles déformations du corps annulaire radialement vers l'extérieur.

La présence combinée de la pluralité de patins internes et de la pluralité de patins externes permet de limiter d'éventuelles déformation par exemple en ovalisation du corps annulaires lors de son actionnement pour le calage des aubes, grâce à quoi on peut obtenir une homogénéité satisfaisante de la commande du calage des aubes. Ceci peut également permettre d'utiliser un corps annulaire moins rigide que les corps annulaires de l'état de la technique, et permettre ainsi un gain de masse.

Dans certains modes de réalisation, le dispositif de commande de calage d'aubes d'une grille d'aubes à calage variable de turbomachine aéronautique peut comprendre une couronne supportant la pluralité de patins externes, la couronne étant disposée radialement à l'extérieur par rapport au corps annulaire.

Une telle couronne peut permettre d'assurer un positionnement adapté des patins externes, une intégration relativement aisée du dispositif de commande au sein d'une turbomachine, et procurer une raideur et/ou une solidité mécanique adaptée.

Dans certains modes de réalisation, la couronne peut comprendre une pluralité de secteurs de couronne.

Par exemple, la couronne peut être composée d'une pluralité de secteurs. Une telle configuration peut aider à faciliter un positionnement adapté des patins externes par rapport au corps annulaire et/ou l'intégration du dispositif de commande au sein d'une turbomachine.

Dans certains modes de réalisation, chaque secteur de couronne peut être muni d'un unique patin externe.

Une telle configuration peut faciliter le réglage et l'ajustement de la position de chaque patin externe vis-à-vis du corps annulaire.

Dans certains modes de réalisation, le corps annulaire peut comprendre au moins un élément de fixation configuré pour être mécaniquement couplé à un vérin de commande, le au moins un élément de fixation et les patins externes de la pluralité de patins externes étant répartis circonférentiellement autour de l'axe de révolution, par exemple régulièrement répartis circonférentiellement autour de l'axe de révolution, lorsque le corps annulaire est dans une position angulaire prédéterminée, par exemple dans une position neutre.

Par exemple, l'élément de fixation peut être une chape ou un oeilleton. Par exemple, le au moins un élément de fixation peut s'étendre radialement vers l'extérieur du corps annulaire, par exemple depuis la face radialement externe. Par exemple, le corps annulaire peut comprendre un unique élément de fixation, par exemple dans le cas où il est couplé à un unique organe de commande, par exemple un vérin de commande. Un tel organe ou vérin de commande est configuré pour déplacer le corps annulaire autour de l'axe de révolution pour ajuster la position angulaire ou circonférentielle du corps annulaire. Par exemple, le corps annulaire peut comprendre deux éléments de fixation distincts, ou plus, par exemple lorsqu'il est configuré pour être couplé à deux organes de commande distincts, ou plus. Par la suite et sauf indication contraire, par « élément de fixation » on entend « le au moins un élément de fixation ».

L'élément de fixation suit les mouvements de rotation autour de l'axe de révolution du corps annulaire tandis que les patins sont fixes en rotation par rapport au corps annulaires. Par exemple, une position neutre du corps annulaire peut correspondre à une position où l'angle de calage des aubes est nominal. Par exemple, dans la position neutre, une première course angulaire maximale du corps annulaire dans un premier sens de correction du calage nominal, et une seconde course angulaire maximale du corps annulaire dans un second sens de correction du calage nominal, opposé au premier sens, sont égales.

On comprend que dans la position neutre, les patins externes et le ou les éléments de fixations peuvent être équidistants deux à deux selon la direction circonférentielle, mais pas nécessairement. En d'autres termes, ils peuvent tous espacés d'un même angle autour de l'axe de révolution. Une telle configuration peut permettre une bonne maitrise des éventuelles déformations du corps annulaire et un guidage satisfaisant du corps annulaire autour de l'axe de révolution.

Dans certains modes de réalisation, les patins internes de la pluralité de patins internes peuvent être répartis circonférentiellement autour de l'axe de révolution, par exemple régulièrement répartis circonférentiellement autour de l'axe de révolution.

On comprend que les patins internes sont disposés autour de l'axe de révolution, et peuvent être équidistants deux à deux selon la direction circonférentielle En d'autres termes, les patins internes peuvent tous être espacés d'un même angle autour de l'axe de révolution. Une telle configuration peut permettre une bonne maitrise des éventuelles déformations du corps annulaire et un guidage satisfaisant du corps annulaire autour de l'axe de révolution.

Dans certains modes de réalisation, le corps annulaire peut comprendre au moins un élément de fixation configuré pour être mécaniquement couplé à un organe de commande, par exemple un vérin de commande, et lorsque le corps annulaire est dans une position angulaire prédéterminée, par exemple dans une position neutre, le au moins un élément de fixation et les patins externes de la pluralité de patins externes d'une part, et les patins internes de la pluralité de patins internes d'autres part, sont disposés alternativement autour de l'axe de révolution.

Par exemple, Il peut y avoir un nombre total N de patins internes, un nombre total N-n de patins externes et nombre total n d'éléments de fixation (N et n étant chacun un entier naturel non nul, n étant strictement inférieur à N). Les patins internes peuvent être dans certains modes de réalisation régulièrement répartis circonférentiellement et espacés angulairement deux à deux de 360°/N autour de l'axe de révolution. Les patins externes et le au moins un élément de fixation peuvent être dans certains modes de réalisation régulièrement répartis circonférentiellement et espacés angulairement deux à deux de 360°/N autour de l'axe de révolution. Par exemple, le au moins un élément de fixation et les patins externes d'une part, et les patins internes d'autres part peuvent espacés deux à deux de 360°/2N autour de l'axe de révolution.

Une répartition alternative selon la direction circonférentielle du au moins un élément de fixation et des patins externes d'une part, et des patins internes d'autres part peut permettre d'améliorer les limitations des éventuelles déformations du corps annulaire, et d'améliorer sont guidage en rotation tout en limitant un risque de blocage.

Dans certains modes de réalisation, le dispositif de commande de calage d'aubes d'une grille d'aubes à calage variable de turbomachine aéronautique peut comprendre un unique organe de commande, par exemple un unique vérin de commande.

Le dispositif de commande selon le présent exposé peut être bien adapté pour une configuration comprenant un unique organe de commande. Ceci permet de réduire significativement l'encombrement du dispositif de commande.

Dans certains modes de réalisation, le dispositif de commande de calage d'aubes d'une grille d'aubes à calage variable de turbomachine aéronautique peut être configuré pour commander le calage des aubes d'une unique grille d'aubes à calage variable.

Le dispositif de commande selon le présent exposé peut être bien adapté pour une configuration comprenant une unique grille d'aubes.

Un mode de réalisation concerne une turbomachine aéronautique, par exemple un turboréacteur du type à soufflante non-carénée ou un turboréacteur du type à soufflante carénée, comprenant une grille d'aubes à calage variable équipé d'un dispositif de commande de calage d'aubes selon l'un quelconque des modes de réalisation décrits dans le présent exposé.

Un turboréacteur du type à soufflante non-carénée est également connu sous la terminologie anglaise « *open fan »* ou *« unducted fan ».*

Dans certains modes de réalisation, la grille d'aubes peut être un stator.

Dans certains modes de réalisation, la grille d'aubes peut être une grille d'aubes de compresseur, par exemple de compresseur basse pression.

Le dispositif de commande selon le présent exposé peut être bien adapté pour un stator, par exemple un stator de compresseur, par exemple un compresseur basse pression, notamment en terme d'encombrement et de maitrise de la déformation de la couronne.

Dans certains modes de réalisation, la grille d'aubes peut être disposée immédiatement en aval d'un bec de séparation de veine de gaz. Un tel bec peut par exemple être un bec de compresseur présentant au moins deux flux.

Le dispositif de commande selon le présent exposé peut être dans certains modes de réalisation commandé avec un unique organe de commande et présenter un encombrement réduit, ce qui le rend bien adapté pour être installé immédiatement en aval d'un bec de séparation de veine de gaz et commander la grille d'aubes immédiatement en aval du bec, où l'espace disponible est réduit.

Dans certains modes de réalisation, la turbomachine aéronautique peut présenter une veine primaire interne, dans laquelle le bec de séparation est un bec de séparation de la veine primaire interne entre une deuxième veine interne et une troisième veine interne.

Dans certains modes de réalisation, la grille d'aubes est dite « première grille d'aubes » et la turbomachine aéronautique peut comprendre une deuxième grille d'aubes à calage variable, par exemple disposée en aval de la première grille d'aubes, la deuxième grille d'aubes étant équipée d'un dispositif de commande de calage d'aubes selon l'un quelconque des modes de réalisations décrits dans le présent exposé, distinct du dispositif de commande de calage d'aubes de la première grille d'aubes.

Le dispositif de commande peut présenter un encombrement réduit et peut être installé dans des environnements très contraints en terme d'espace disponible, par exemple sur deux grilles successives, par exemple deux grilles de stator, devant être commandés indépendamment l'un de l'autre par deux système de commande distincts.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente un aéronef équipé d'une turbomachine pour aéronef,
[Fig. 2] La figure 2 représente une vue en coupe de la turbomachine de type soufflante non carénée pour aéronef de la figure 1,
[Fig. 3] La figure 3 représente une vue schématique du générateur de gaz de la turbomachine de la figure 2,
[Fig. 4] La figure 4 représente une vue en coupe de la loupe IV de la figure 2, et
[Fig. 5] La figure 5 représente une vue schématique d'un dispositif de commande de calage d'aubes d'une grille d'aubes à calage variable de la turbomachine aéronautique de la figure 2, vu selon le plan de coupe V de la figure 4.

### Description des modes de réalisation

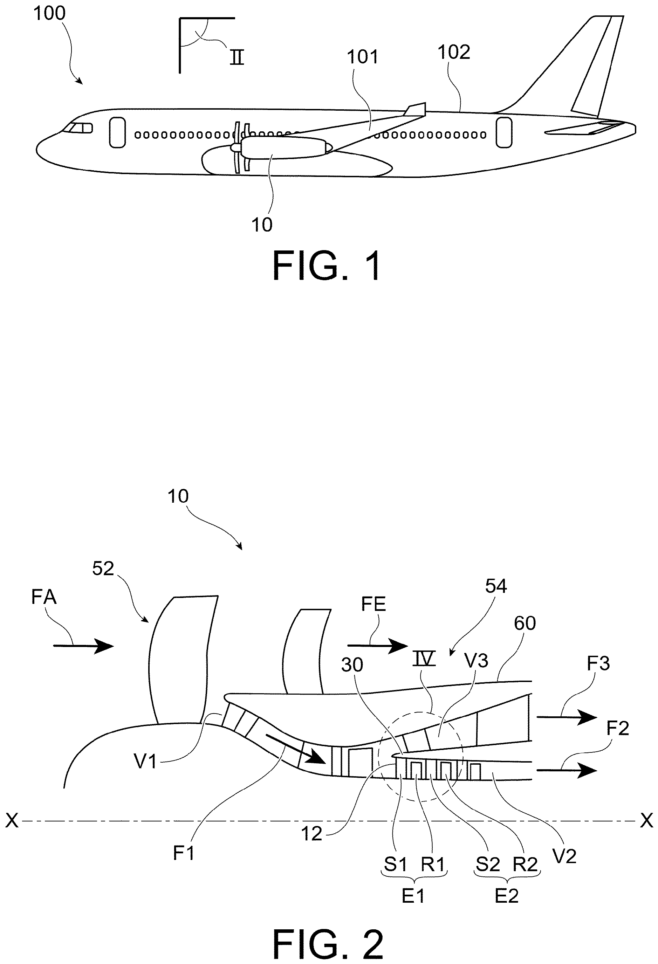

La figure 1 représente un aéronef 100, dans cet exemple un avion, équipé de deux turbomachines aéronautique 10, dans cet exemple deux turboréacteurs à soufflante non-carénée 10, à savoir une turbomachine 10 par aile 101, une seule turbomachine 10 et une seule aile 101 étant représentées sur la figure 1. Selon une variante, l'aéronef 100 peut être équipé de plus d'une turbomachine 10 par aile 101, chaque aile 101 étant pourvue d'un même nombre de turbomachines 10.

La figure 2 représente une vue en coupe schématique de la turbomachine 10, selon la plan II de la figure 1. La turbomachine 10 présente une direction axiale X et comprend une soufflante (ou fan) 52, qui dans cet exemple est non-carénée, et un générateur de gaz 54 (représenté partiellement sur la figure 2). Selon une variante non représentée, la soufflante peut être carénée.

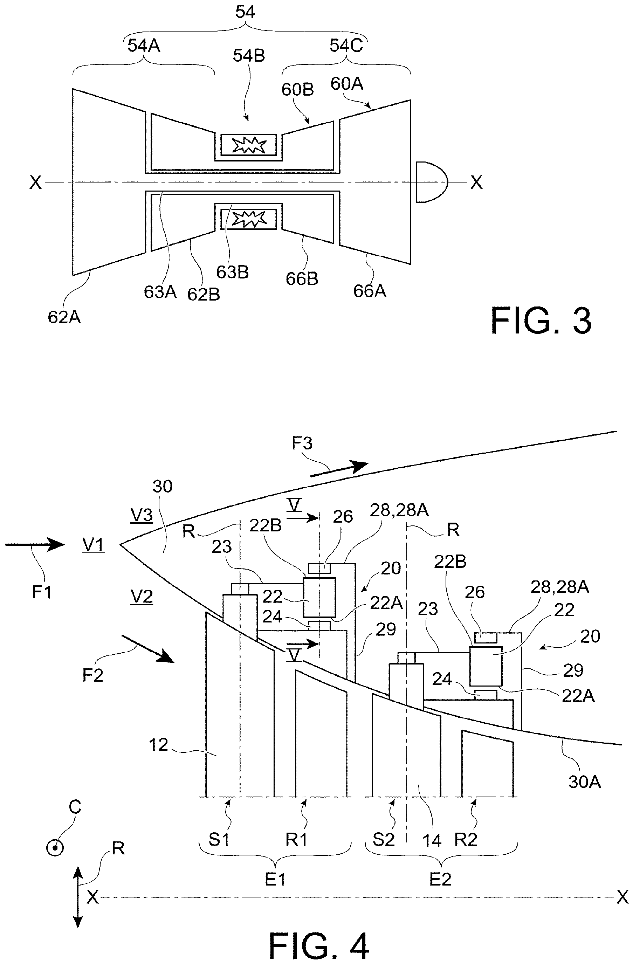

Dans cet exemple, en référence à la figure 3, le générateur de gaz 54 comprend de l'amont vers l'aval, les gaz s'écoulant au sein de la turbomachine 10 de l'amont vers l'aval, un compresseur 54A (ou section compresseur 54A), une chambre de combustion 54B, et une turbine 54C (ou section turbine 54C). Dans cet exemple, la soufflante 52 peut être entrainée en rotation par un arbre du générateur de gaz 54, par exemple un arbre d'un corps basse pression, directement ou par l'intermédiaire d'un réducteur de vitesse.

L'axe X correspond à l'axe de rotation du générateur de gaz 54. Le générateur de gaz 54 peut être du type double-corps et comprendre un corps basse pression 60A et un corps haute pression 60B. Le corps basse pression 60A peut comprendre un compresseur basse pression 62A couplé en rotation avec une turbine basse pression 66A par l'intermédiaire d'un arbre basse pression 63A. Le corps haute pression 60B peut comprendre un compresseur haute pression 62B disposé en aval du compresseur basse pression 62A et en amont de la chambre de combustion 54B, et une turbine haute pression 66B, disposée en aval de la chambre de combustion 54B et amont de la turbine basse pression 66A, et couplée en rotation avec le compresseur haute pression 62B par l'intermédiaire d'un arbre haute pression 63B. Le compresseur 54A du générateur de gaz 54 peut comprendre les compresseurs basse et haute pression 62A et 62B. La turbine 54C du générateur de gaz 54 peut comprendre les turbines basse et haute pression 66A et 66B. La figure 3 est schématique, chaque compresseur et chaque turbine pouvant présenter un ou plusieurs étages, chaque étage comprenant un rotor (ou roue mobile) et un stator ou redresseur (ou encore roue fixe).

Comme cela est représenté sur la figure 2, au sein de la turbomachine 10, un flux d'air amont FA passe par la soufflante 52 et est séparé entre un flux primaire interne F1, qui s'écoule au sein d'une veine primaire interne V1 à l'intérieur de la turbomachine 10, par exemple à l'intérieur de la nacelle 60, et un flux externe FE, qui s'écoule à l'extérieur de la turbomachine 10, par exemple à l'extérieur de la nacelle 60. Un bec 30 de séparation de veine de gaz, dans cet exemple de la veine primaire interne V1, sépare la veine primaire interne V1 en une deuxième veine interne V2 dans laquelle s'écoule un flux F2 et une troisième flux interne V3 dans laquelle s'écoule un flux F3. Dans cet exemple, le bec 30 est un bec disposé au sein du compresseur 54A, par exemple au sein du compresseur basse pression 62A.

La figure 4 représente une vue en coupe de la loupe IV de la figure 2. La figure 4 représente le bec 30, et immédiatement en aval du bec 30, deux étages E1 et E2 successifs (selon la direction axiale X) du compresseur basse pression 62A. Chaque étage E1 et E2 comprend respectivement un stator S1, S2 et un rotor R1, R2, chacun des stators S1, S2 et des rotor R1, R2 formant, au sens du présent exposé, une grille d'aubes. Le stator S1 forme la grille d'aubes disposée immédiatement en aval du bec 30. Les stators S1, S2, sont immobiles en rotation autour de l'axe X de la turbomachine 10, tandis que les rotor R1, R2 sont mobiles en rotation autour de l'axe X. Dans cet exemple, le stator S2 est le stator immédiatement en aval du stator S1 tandis que le rotor R1 est la grille d'aubes immédiatement en aval du stator S1. Les aubes 12, 14 des stators S1, S2 sont à calage variable, et peuvent dans cet exemple, pivoter autour de la direction radiale R (i.e. pivoter autour de la direction selon laquelle s'étend le profil aérodynamique de l'aube et qui peut présenter une inclinaison par rapport à la direction radiale R). Les aubes 12, 14 sont montées pivotante sur le carter 30A. Dans cet exemple, chacun des stators S1 et S2 du compresseur basse pression 62A est équipé d'un dispositif de commande de calage d'une grille d'aubes 20 distinct. En d'autres termes, dans cet exemple le stator S1 forme une première grille d'aubes à calage variable équipée d'un dispositif de commande de calage d'aubes 20 et le stator S2 forme une deuxième grille d'aubes à calage variable disposée en aval de la première grille d'aubes S1, la deuxième grille d'aubes S2 étant équipée d'un dispositif de commande de calage d'aubes 20 distinct du dispositif de commande de calage d'aubes 20 de la première grille d'aubes S1. Par la suite, chaque stator S1, S2 étant équipé d'un dispositif de commande 20 similaire, seul le dispositif de commande 20 du stator S1 est décrit, cette description s'appliquant également au dispositif de commande 20 du stator S2. Chacun des dispositifs de commande 20 du présent exemple est configuré pour commander le calage des aubes 12, 14 d'une unique grille d'aubes à calage variable S1, S2, respectivement.

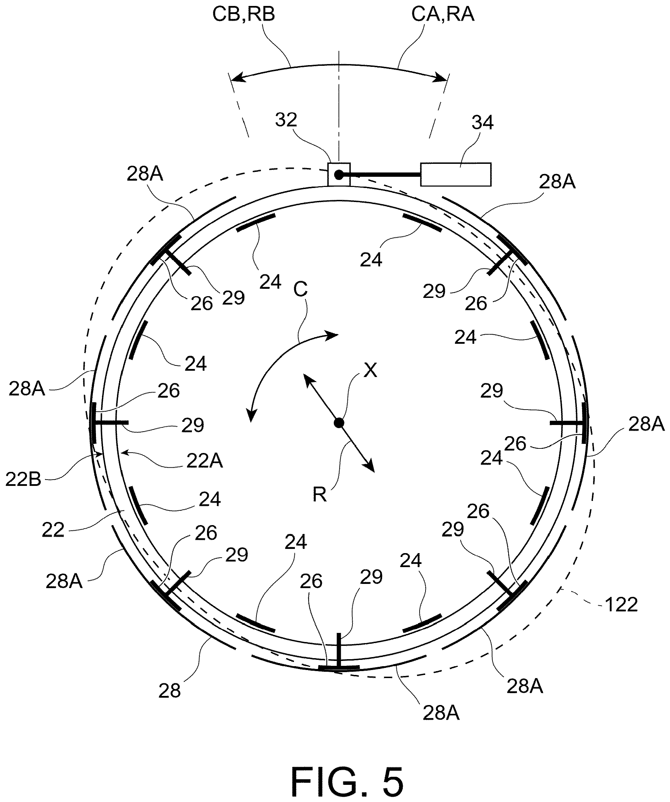

Le dispositif de commande 20 est décrit en référence aux figures 4 et 5. Le dispositif de commande 20 comprend un corps annulaire 22 d'axe de révolution confondu avec l'axe X de la turbomachine 10 sur laquelle le dispositif de commande 20 est monté. Le corps annulaire 22 est configuré pour être relié mécaniquement aux aubes 12 et pour ajuster le calage des aubes 12 en fonction de sa position angulaire autour de l'axe de révolution X (i.e. position selon la direction circonférentielle C). Dans cet exemple, le corps annulaire 22 est relié de manière connue par ailleurs par l'homme du métier aux aubes 12, notamment via des leviers de commande 23. Chaque levier de commande 23 est couplées en rotation à une aube 12 et présente une liaison adaptée avec le corps annulaire 22, par exemple une liaison pivot, une liaison pivot glissant ou une liaison rotule (non représentée).

Le corps annulaire 22 présente une face radialement interne 22A et une face radialement externe 22B. Le dispositif de commande 20 comprend une pluralité de patins internes 24 configurée pour coopérer avec la face radialement interne 22A du corps annulaire 22 et une pluralité de patins externes 26 configurée pour coopérer avec la face radialement externe 22B du corps annulaire 22, grâce à quoi les mouvements du corps annulaire 22 sont limités radialement vers l'intérieur et vers l'extérieur, et guidés en rotation autour de l'axe de révolution X. Dans cet exemple, le dispositif de commande 20 peut comprendre une couronne 28 supportant la pluralité de patins externes 26, la couronne 28 étant disposée radialement à l'extérieur par rapport au corps annulaire 22. Par exemple, la couronne 28 peut être monté sur le carter 30A, dans cet exemple un carter de compresseur basse pression, par l'intermédiaire de supports 29, dans cet exemple des équerres. Par exemple, il peut y avoir autant de supports 29 que de patins externes 26. Par exemple, les supports 29 peuvent être disposés dans les mêmes positions angulaires que les patins externes 26. Par exemple, la couronne 28 peut comprendre, par exemple être formée, d'une pluralité de secteurs de couronne 28A. Par exemple, chaque secteur de couronne 28A est muni d'un unique patin externe 26.

Le corps annulaire 22 peut comprendre au moins un élément de fixation 32 configuré pour être mécaniquement couplé à un organe de commande 34. Dans cet exemple, le corps annulaire 22 comprend un unique élément de fixation 32, dans cet exemple une chape faisant saillie radialement vers l'extérieur depuis la face radialement externe 22B, et le dispositif de commande 20 comprend un unique organe de commande 34, dans cet exemple un unique vérin 34.

La figure 5 représente le corps annulaire 22 en positon neutre, qui forme un exemple de position angulaire prédéterminée. Par exemple, en position neutre, le corps annulaire 22 peut réaliser une course angulaire ou circonférentielle maximale CA dans un premier sens de rotation RA autour de l'axe X d'une même amplitude qu'une course angulaire ou circonférentielle maximale CB dans un second sens de rotation RB autour de l'axe X, opposé au premier sens de rotation RA. Comme cela est visible sur la figure 5, dans cet exemple, l'élément de fixation 32 et les patins externes 26 de la pluralité de patins externes sont régulièrement répartis circonférentiellement autour de l'axe de révolution X lorsque le corps annulaire 22 est dans la position angulaire prédéterminée, par exemple dans la position neutre. Dans cet exemple, il y a sept patins externes 26 et un élément de fixation 32, de sorte que les éléments de l'ensemble formé par les patins externes 26 et l'élément de fixation 32 sont espacés angulairement deux à deux de 360°/8, soit de 45°.

Comme cela est visible sur la figure 5, les patins internes 24 de la pluralité de patins internes sont dans cet exemple régulièrement répartis circonférentiellement autour de l'axe de révolution X. Dans cet exemple, il y a huit patin internes 24 de sorte les patins internes 24 sont espacés angulairement deux à deux de 360°/8, soit de 45°.

Dans cet exemple, comme cela est visible sur la figure 5, lorsque le corps annulaire 22 est dans une position angulaire prédéterminée, par exemple dans sa position neutre, l'élément de fixation 32 et les patins externes 26 de la pluralité de patins externes d'une part, et les patins internes 24 de la pluralité de patins internes d'autres part, sont disposés alternativement autour de l'axe de révolution X. Autrement dit, selon la direction circonférentielles C, on alterne entre un élément de l'ensemble formé par les patins externes 26 et l'élément de fixation 32 d'une part et un patin interne 24 de la pluralité de patins interne d'autre part. Dans cet exemple, il y a sept patins externes 26 et un élément de fixation 32 régulièrement répartis circonférentiellement d'une part et huit patins internes 24 régulièrement répartis circonférentiellement d'autre part. Dans cet exemple, les éléments de l'ensemble formé par les patins externes 26 et l'élément de fixation 32 d'une part et les patins internes 24 d'autres part sont angulairement espacés deux-à-deux de 360°/16, soit 22.5°.

Sur la figure 5, la référence 122 représente en trait discontinu une déformée en ovalisation d'un organe annulaire 122 d'un dispositif de commande qui ne serait pas pourvu d'une pluralité de patins internes et externes. Grâce à l'effet combiné de la pluralité de patins internes 24 et de la pluralité de patins externes 26, l'anneau 22 est guidé en rotation et voit ses éventuels mouvements de déformation radiale limités. Ainsi, l'angle de calage imposé le dispositif de commande 20 est homogène sur l'ensemble des pales 12 du stator S1.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif de commande de calage d'aubes (20) d'une grille d'aubes à calage variable (S1, S2) de turbomachine aéronautique (10), le dispositif de commande (20) comprenant un corps annulaire (22) d'axe de révolution (X), le corps annulaire (22) étant configuré pour être relié mécaniquement aux aubes (12, 14) et pour ajuster le calage des aubes (12, 14) en fonction de la position angulaire du corps annulaire (22) autour de l'axe de révolution (X), le corps annulaire (22) présentant une face radialement interne (22A) et une face radialement externe (22B), le dispositif de commande (20) comprenant une pluralité de patins internes (24) configurée pour coopérer avec la face radialement interne (22A) du corps annulaire (22) et une pluralité de patins externes (26) configurée pour coopérer avec la face radialement externe (22B) du corps annulaire (22), grâce à quoi les mouvements du corps annulaire (22) sont limités radialement vers l'intérieur et vers l'extérieur, et guidés en rotation autour de l'axe de révolution (X).

2. Dispositif de commande de calage d'aubes (20) d'une grille d'aubes à calage variable (S1, S2) de turbomachine aéronautique (10) selon la revendication 1, comprenant une couronne (28) supportant la pluralité de patins externes (26), la couronne (28) étant disposée radialement à l'extérieur par rapport au corps annulaire (22).

3. Dispositif de commande de calage d'aubes (20) d'une grille d'aubes à calage variable (S1, S2) de turbomachine aéronautique (10) selon la revendication 2, dans lequel la couronne (28) comprend une pluralité de secteurs de couronne (28A).

4. Dispositif de commande de calage d'aubes (20) d'une grille d'aubes à calage variable (S1, S2) de turbomachine aéronautique (10) selon la revendication 3, dans lequel chaque secteur de couronne (28A) est muni d'un unique patin externe (26).

5. Dispositif de commande de calage d'aubes (20) d'une grille d'aubes à calage variable (S1, S2) de turbomachine aéronautique (10) selon l'une quelconque des revendications 1 à 4, dans lequel le corps annulaire (22) comprend au moins un élément de fixation (32) configuré pour être mécaniquement couplé à un organe de commande (34), par exemple un vérin de commande (34), le au moins un élément de fixation (32) et les patins externes (26) de la pluralité de patins externes étant répartis circonférentiellement autour de l'axe de révolution (X), par exemple régulièrement répartis circonférentiellement autour de l'axe de révolution (X), lorsque le corps annulaire (22) est dans une position angulaire prédéterminée, par exemple dans une position neutre.

6. Dispositif de commande de calage d'aubes (20) d'une grille d'aubes à calage variable (S1, S2) de turbomachine aéronautique (10) selon l'une quelconque des revendications 1 à 5, dans lequel les patins internes (24) de la pluralité de patins internes sont répartis circonférentiellement autour de l'axe de révolution (X), par exemple régulièrement répartis circonférentiellement autour de l'axe de révolution.

7. Dispositif de commande de calage d'aubes (20) d'une grille d'aubes à calage variable (S1, S2) de turbomachine aéronautique (10) selon l'une quelconque des revendications 1 à 6, dans lequel le corps annulaire (22) comprend au moins un élément de fixation (32) configuré pour être mécaniquement couplé à un organe de commande (34), par exemple un vérin de commande (34), et dans lequel lorsque le corps annulaire (22) est dans une position angulaire prédéterminée, par exemple dans une position neutre, le au moins un élément de fixation (32) et les patins externes (26) de la pluralité de patins externes d'une part, et les patins internes (24) de la pluralité de patins internes d'autres part, sont disposés alternativement autour de l'axe de révolution (X).

8. Dispositif de commande de calage d'aubes (20) d'une grille d'aubes à calage variable (S1, S2) de turbomachine aéronautique (10) selon l'une quelconque des revendications 1 à 7, comprenant un unique organe de commande (34), par exemple un unique vérin de commande (34).

9. Dispositif de commande de calage d'aubes (20) d'une grille d'aubes à calage variable (S1, S2) de turbomachine aéronautique (10) selon l'une quelconque des revendications 1 à 8, configuré pour commander le calage des aubes (12, 14) d'une unique grille d'aubes à calage variable (S1, S2).

10. Turbomachine aéronautique (10), comprenant une grille d'aubes à calage variable (S1, S2) équipée d'un dispositif de commande de calage d'aubes (20) selon l'une quelconque des revendications 1 à 9.

11. Turbomachine aéronautique (10) selon la revendication 10, dans laquelle la grille d'aubes (S1) est disposé immédiatement en aval d'un bec (30) de séparation de veine de gaz.

12. Turbomachine aéronautique (10) selon la revendication 11, présentant une veine primaire interne (V1), dans laquelle le bec (30) de séparation est un bec de séparation de la veine primaire interne (V1) entre une deuxième veine interne (V2) et une troisième veine interne (V3).

13. Turbomachine aéronautique (10) selon l'une quelconque des revendications 10 à 12, dans laquelle la grille d'aubes (S1) est dite « première grille d'aubes » et comprenant une deuxième grille d'aubes à calage variable (S2), par exemple disposée en aval de la première grille d'aubes (S1), la deuxième grille d'aubes (S2) étant équipée d'un dispositif de commande de calage d'aubes (20) selon l'une quelconque des revendication 1 à 9 distinct du dispositif de commande de calage d'aubes (20) de la première grille d'aubes (S1).
